Europäisches Patentamt

European Patent Office

Office européen des brevets

(19)

(11) Veröffentlichungsnummer : **0 152 758**
**B1**

# (12) EUROPÄISCHE PATENTSCHRIFT

(45) Veröffentlichungstag der Patentschrift :
15.06.88

(21) Anmeldenummer : 85100343.4

(22) Anmeldetag : 15.01.85

(51) Int. Cl.⁴ : **B 23 Q   3/00**

(54) Vorrichtung zum Führen von Werkstücken an Werkzeugmaschinen, insbesondere Holzbearbeitungsmaschinen.

(30) Priorität : 10.02.84 DE 3404806

(43) Veröffentlichungstag der Anmeldung :
28.08.85 Patentblatt 85/35

(45) Bekanntmachung des Hinweises auf die Patenterteilung : 15.06.88 Patentblatt 88/24

(84) Benannte Vertragsstaaten :
AT BE CH DE FR GB IT LI LU NL SE

(56) Entgegenhaltungen :
DE-A- 2 610 711
DE-C-   802 723
DE-C-   804 264
FR-A- 1 188 496
FR-A- 1 498 328
FR-A- 2 436 659
US-A- 1 744 875
US-A- 4 058 151

(73) Patentinhaber : Aigner, Georg

D-8386 Thannenmais (DE)

(72) Erfinder : Aigner, Georg

D-8386 Thannenmais (DE)

(74) Vertreter : Gustorf, Gerhard, Dipl.-Ing.
Patentanwalt Dipl.-Ing. Gerhard Gustorf Mühlenstrasse 1
D-8300 Landshut (DE)

Jouve, 18, rue St-Denis, 75001 Paris, France

EP 0 152 758 B1

## Beschreibung

Die Erfindung betrifft eine Vorrichtung zum Führen von Werkstücken an Werkzeugmaschinen, insbesondere Holzbearbeitungsmaschinen, mit einem das Werkstück elastisch gegen einen Anschlag drückenden Druckorgan, das an einem an der Werkzeugmaschine anbringbaren Haltearm befestigt ist, der an einer Vertikalführung stufenlos höhenverstellbar befestigt ist, welche in einer Horizontalführung in Richtung des anzubringenden Drucks stufenlos verstellbar ist.

Bei der Bearbeitung von Werkstücken aus Holz ist es bisher üblich, diese manuell zu halten und zu führen. Beim Einsatz von Vorschubapparaten ist ein derartiges Andrücken von Hand nicht mehr möglich. Ein weiterer Nachteil besteht darin, daß sehr leicht Verletzungen an der Hand der Bedienungsperson möglich sind.

Eine aus der deutschen Gebrauchsmusterschrift DE-U-19 28 726 bekannte Vorrichtung zum Führen von Werkstücken ist aufgrund ihrer beschränkten und komplizierten Verstellmöglichkeit insbesondere für den Einsatz in Transferstraßen geeignet, bei denen eine einmalige Einstellung über lange Zeit unverändert bleibt.

Der Haltearm dieser Vorrichtung wird dabei mittels einer schellenartigen Klemme an der Werkzeugmaschine festgeschraubt, wobei aufgrund der unterschiedlichen Höhe von zwei gegenüberliegenden Aufspannflächen nur zwei Höhenstufen für die Befestigung des Druckorgans möglich sind. Diese beiden Höhenstufen liegen verhältnismäßig dicht über der Arbeitsebene.

Eine Vorrichtung der eingangs umrissenen Gattung ist Gegenstand der DE-C-802 723. Bei dieser bekannten Vorrichtung zum Halten und Führen eines Arbeitsstückes beim Fräsen ist unmittelbar auf der Arbeitsfläche der Werkzeugmaschine eine Verstellplatte angeschraubt, die einerseits — über einen zweiarmigen Druckhebel — zwei horizontal wirkende Druckrollen und andererseits — über eine vertikale Säule und einen davon abstehenden Arm — zwei vertikal auf die Oberseite des Werkstücks wirkende Druckrollen trägt. Die Druckrollen sind aus elastischem Material ausgeführt, beispielsweise Gummi, um innerhalb gewisser Grenzen einen bestimmten Andruck zu schaffen. Eine Nachgiebigkeit der Druckrollen in Druckrichtung ist jedoch nur innerhalb der Werkstoffgrenzen der Druckrollen möglich, die zudem raschen Verschleißerscheinungen ausgesetzt sind.

Der Erfindung liegt die Aufgabe zugrunde, eine Vorrichtung der angegebenen Bauart zur Verfügung zu stellen, die eine rasche und universelle Verstellbarkeit des Druckorgans sowohl vertikal als auch horizontal in weiten Grenzen gestattet, so daß die Bedienungsperson die jeweilige Position rasch an die Abmessungen des zu bearbeitenden Werkstückes anpassen kann.

Gemäß der Erfindung wird diese Aufgabe dadurch gelöst, daß der Haltearm in seiner Druckrichtung federnd nachgiebig in einem Befestigungsblock gelagert ist, welcher in der Vertikalführung höhenverstellbar befestigt ist, und daß die Horizontalführung auf einem Einhängeblock befestigt ist, der auf einem an der Werkzeugmaschine angebrachten Führungsbügel feststellbar ist.

Eine derartige Vorrichtung kann leicht an jeder handelsüblichen Werkzeugmaschine befestigt werden, wobei das Druckorgan so gegen das Werkstück angestellt wird, daß es dieses gegen den einstellbaren Anschlag der Werkzeugmaschine drückt. Die Vorrichtung benötigt sehr wenig Raum und gestattet dadurch ein behinderungsfreies Arbeiten. Sofern größere Werkstücke bearbeitet werden sollen, können auch mehrere dieser Vorrichtungen nebeneinander und/oder übereinander eingesetzt werden. Zur universellen Verwendbarkeit trägt die Tatsache bei, daß die Horizontalführung auf einem Einhängeblock befestigt ist, der auf einem an der Werkzeugmaschine angebrachten Führungsbügel feststellbar ist. Die Arbeitsebene der Werkzeugmaschine muß dabei nicht mit Einschraubmitteln oder dgl. versehen sein.

In vorteilhafter Weiterbildung der Erfindung ist vorgesehen, daß der Befestigungsblock um eine zur Horizontalführung parallele Drehachse verdrehbar an der Vertikalführung befestigt ist.

Durch diese Maßnahme ist es möglich, auch bogenförmige Werkstücke z. B. durch Fräsen zu bearbeiten, wobei das Druckorgan seitlich versetzt neben dem Werkzeug gegen das Werkstück drückt. Das Druckorgan wird dabei so geschwenkt, daß beim Vorschub des Werkstückes im Berührungspunkt zwischen diesem und dem Druckorgan keine Vertikalkraftkomponente entstehen, die zu einem Auslenken des Werkstückes aus seiner vorgesehenen Bewegungsbahn führen würden.

Nach einem weiteren Merkmal der Erfindung weist der Befestigungsblock einen zylindrischen Ansatz auf, dessen Achse die Drehachse ist und der in die Vertikalführung drehbar und höhenverschieblich eingreift und in dieser festklemmbar ist.

Dabei kann von dem zylindrischen Ansatz ein exzentrischer Raststift abstehen, der in einen in die Vertikalführung eingearbeiteten, vertikalen Führungsschlitz einsetzbar ist. Auf diese Weise kann der Befestigungsblock in zwei um 180° gedrehten Stellungen definiert an der Vertikalführung festgelegt werden.

Wenn nach einem bevorzugten Ausführungsbeispiel der Raststift federnd in den Ansatz eindrückbar ist, kann der Befestigungsblock an der Vertikalführung stufenlos verdreht und festgeklemmt werden, ohne ihn hierzu von der Vertikalführung abnehmen zu müssen.

In weiterer Ausgestaltung der Erfindung ist vorgesehen, daß der Haltearm über einen federnden Rastsitz abnehmbar in einem Halteorgan befestigt ist, das in Druckrichtung des Druckorgans federnd nachgiebig im Befestigungsblock gelagert ist. Damit kann der Haltearm bei Bedarf umgedreht oder ausgewechselt werden, etwa im Fall von Wartungs- oder Austauscharbeiten am Druckorgan oder eines Ersatzes gegen einen Haltearm anderer Abmessungen.

Besonders vorteilhaft ist es, wenn das Druckorgan eine am Haltearm lose drehbare, flache Rolle ist, deren vom Haltearm wegweisende Oberfläche eben ist und über die die Drehachse der Rolle nicht hervorsteht. Mit dieser Ausbildung ist es möglich, das Druckorgan sehr nahe an die Arbeitsebene des Werkstückes heranzuführen, um beispielsweise sehr niedrige Werkstücke zu bearbeiten. Außerdem gibt diese Ausbildung des Druckorgans die Möglichkeit, Vorschubapparate einzusetzten, die verhältnismäßig große Abmessungen haben und damit weit über die flache Rolle hervorstehen, ohne durch über die Oberfläche der Rolle ragende Teile behindert zu werden.

Bei sehr dicken Werkstücken ist es vorteilhaft, wenn die Horizontalführung in Richtung ihrer Längserstreckung stufenlos verstellbar auf dem Einhängeblock befestigt ist. Damit kann das Druckorgan sehr weit aus dem Arbeitsbereich des Werkzeuges zurückgezogen werden.

Die Erfindung ist nachstehend an einem Ausführungsbeispiel erläutert, das in der Zeichnung dargestellt ist. Es zeigen :

Figur 1 eine perspektivische Darstellung einer Vorrichtung gemäß der Erfindung,

Figur 2 eine perspektivische Darstellung der Vorrichtung in Richtung des Pfeiles B der Figur 1,

Figur 3 eine teilweise geschnittene Draufsicht des Haltearmes und seines Rastsitzes in einem Halteorgan,

Figur 4 eine Seitenansicht des Haltearms in Arbeitsstellung,

Figur 5 eine Seitenansicht des Haltearms in einer anderen Arbeitsstellung und

Figur 6 eine Seitenansicht der Vorrichtung in einer weiteren Arbeitsstellung.

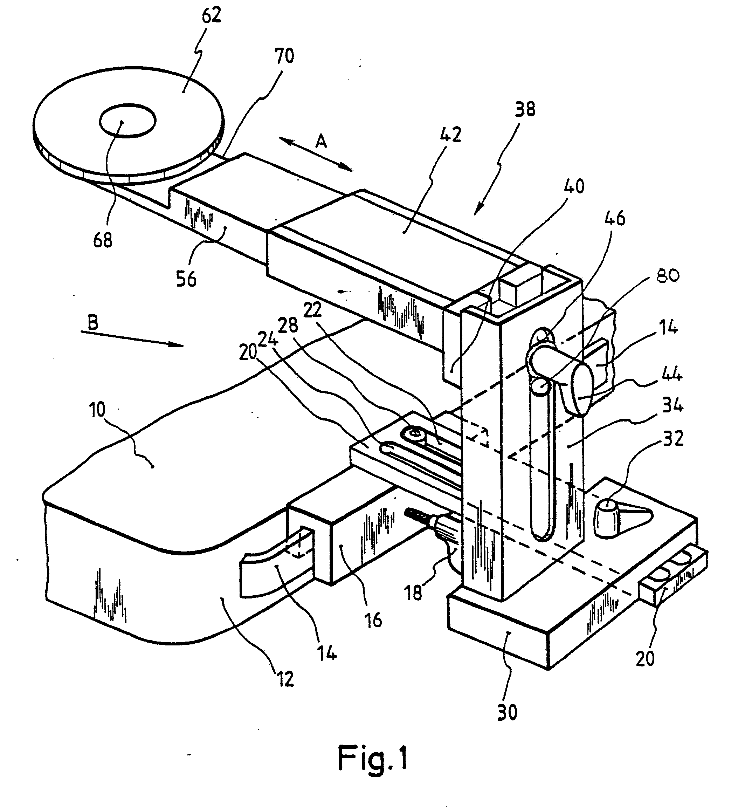

Figur 1 zeigt einen Tisch 10 einer Holzbearbeitungsmaschine, beispielsweise einer Fräsmaschine, an dessen vertikalen Kanten 12 ein Befestigungsbügel 14 angeschraubt ist. Auf diesen Befestigungsbügel 14 ist ein U-förmiger Einhängeblock 16 aufgesetzt und mittels einer Klemmschraube 18 befestigt. Nach Lösen der Klemmschraube 18 kann der Einhängeblock auf dem Befestigungsbügel 14 parallel zur Kante 12 des Tisches 10 verschoben werden.

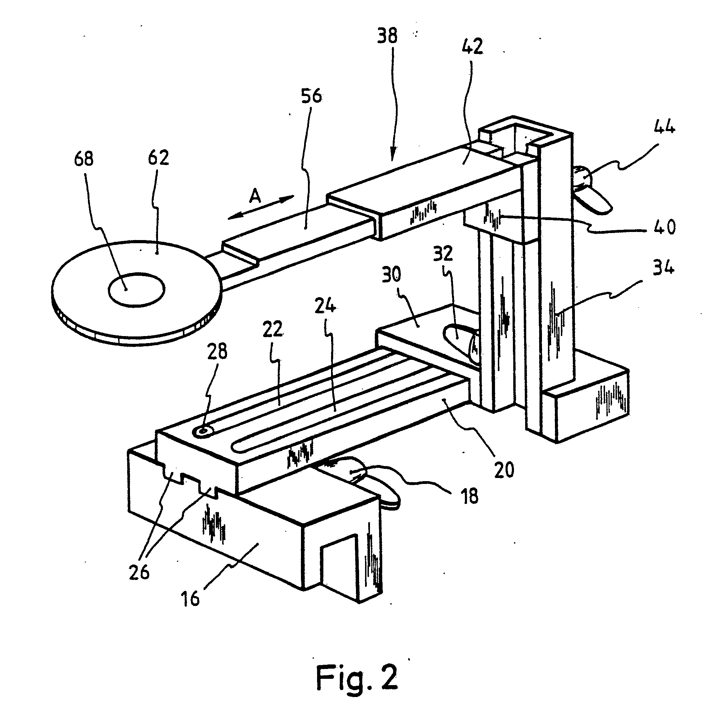

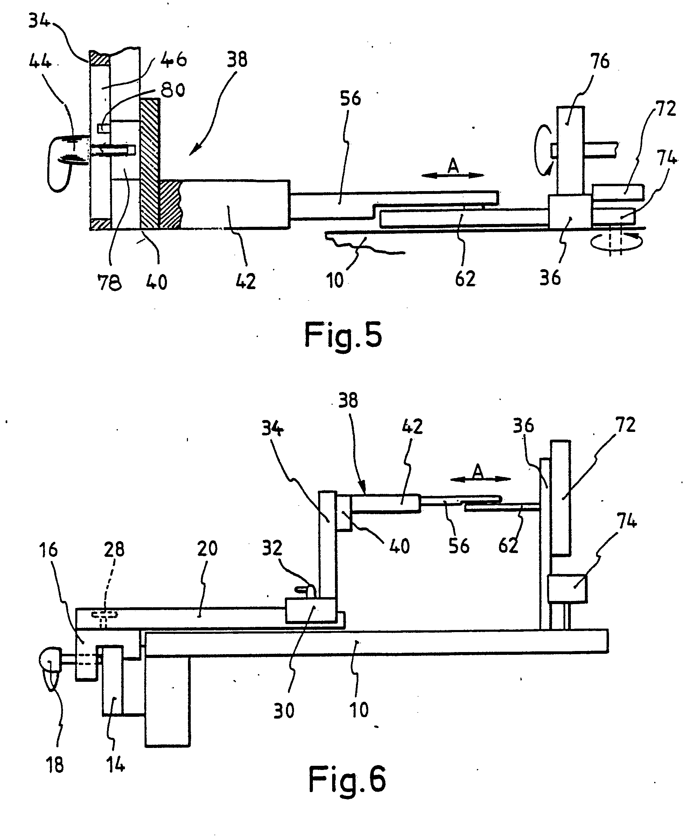

Auf der Oberseite des Einhängeblockes 16 ist eine leistenförmige Horizontalführung 20 befestigt, in die zwei von der Oberseite zur Unterseite durchgehende Längsschlitze 22 und 24 eingearbeitet sind. Die Horizontalführung 20 ist über eine in Figur 2 angedeutete Nut- und Federverbindung 26 auf dem Einhängeblock 16 in ihrer Längserstreckung verschiebbar geführt. Zur Fixierung der eingestellten Position der Horizontalführung 20 auf dem Einhängeblock 16 dient eine Innensechskantschraube 28, die in den Längsschlitz 22 eingreift und mit ihrem Gewindeende in den Einhängeblock 16 eingeschraubt ist. Nach Lösen der Innensechskantschraube 28 läßt sich die Horizontalführung 20 im Bereich der Längserstreckung des Längsschlitzes 22 auf dem Einhängeblock verschieben. Während die Figuren 1 und 2 die eine Endstellung der Horizontalführung 20 zeigen, ist in Figur 6 die andere Endstellung angedeutet, bei der sich die Längsführung 20 über den Tisch 10 erstreckt.

Auf die Längsführung 20 ist ein Schlitten 30 aufgesetzt, der im wesentlichen die Form eines umgekehrten U hat und mit seinen beiden vertikalen Schenkeln an den Längskanten der Horizontalführung sowie mit seinem horizontalen Verbindungssteg auf der Oberseite der Horizontalführung 20 anliegt. Der Schlitten kann auf der Horizontalführung 20 in deren Längserstreckung verschoben werden, wobei auch hier wieder die Figuren 1 und 2 im wesentlichen die eine Endstellung und die Figur 6 die andere Endstellung zeigen.

Zur Blockierung des Schlittens 30 auf der Horizontalführung 20 dient eine weitere Klemmschraube 32, die durch den zweiten Längsschitz 24 hindurchläuft und in bekannter und nicht dargestellter Weise mit ihrem unteren Ende in dem Längsschlitz 24 verklemmt werden kann, ohne über die Unterseite der Horizontalführung 20 hinauszuragen.

Am Schlitten 30 ist im Bereich neben der Horizontalführung 20 eine Vertikalführung 34 in Form einer Schiene mit einem Querschnitt eines liegenden U befestigt. Die offene Seite des U erstreckt sich dabei zu dem zu bearbeitenden Werkstück 36. In dieser Vertikalführung 34 ist ein L-förmiger Befestigungsblock 38 mit Verschiebesitz angeordnet, wobei sich der kleinere L-Schenkel 40 innerhalb der Schiene der Vertikalführung 34 befindet, während sich der größere L-Schenkel 42 horizontal über dem Tisch und parallel zur Horizontalführung 20 erstreckt.

Der Befestigungsblock 38 weist einen zylindrischen Ansatz 78 auf, dessen Durchmesser dem Innenabstand der U-Schenkel der Vertikalführung 34 entspricht, in die der Ansatz 78 eingreift. Um die Achse des zylindrischen Ansatzes 78 ist der Befestigungsblock 38 in der Vertikalführung 34 verdrehbar.

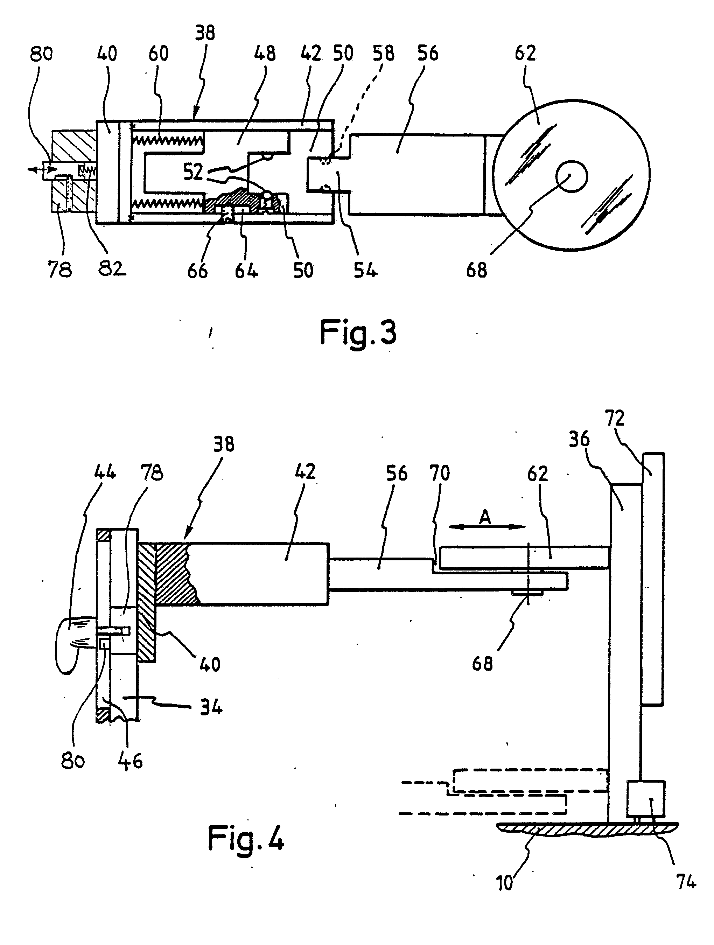

Der Befestigungsblock 38 kann mittels einer Feststellschraube 44, die durch einen vertikalen Schlitz 46 in der Vertikalführung 34 hindurchgeführt ist, in der eingestellten Höhenlage und Winkellage an der Vertikalführung 34 festgeklemmt werden. In zwei in den Figuren 4 und 5 gezeigten, um 180° gedrehten Stellungen des Befestigungsblockes 38 greift ein Raststift 80 in den vertikalen Schlitz 46 der Vertikalführung 34 ein und fixiert dadurch den Befestigungsblock 38 in diesen beiden Stellungen. Der Raststift 80 liegt exzentrisch zur Achse des zylindrischen Ansatzes 78 und ist, wie Figur 3 zeigt, gegen eine Feder 82 in den zylindrischen Ansatz 78 eindrückbar, so daß er bei anderen als in den Figuren 4 und 5 gezeigten Stellungen des Befestigungsblockes 38 innerhalb des zylindrischen Ansatzes 78 liegt. Dadurch ist es möglich, den Befestigungsblock 38 in jeder beliebigen Winkellage an der Vertikalführung 34 festzulegen, ohne hierzu den Befestigungsblock 38 abnehmen zu müssen.

In der in Figur 4 gezeigten Stellung des Befestigungsblockes 38 befindet sich der horizontale Schenkel 42 des Befestigungsblocks 38 am oberen Ende des vertikalen Schenkels 40, während er sich in der Stellung gemäß Figur 5 am unteren Ende des vertikalen Schenkels 40 befindet.

Der horizontale Schenkel 42 des Befestigungsblocks 38 ist als ein zum freien Ende des Schenkels 42 hin offener Kasten ausgebildet, in dem in Längserstreckung verschiebbar ein gabelförmiges Halteorgan 48 sitzt, in dessen beiden Zinken 50 je eine federbelastete Kugel 52 gelagert ist. Zwischen die beiden Zinken 50 ist ein Ende 54 eines Haltearms 56 eingesetzt, wobei das Ende 54 Rastsitze 58 aufweist, in die die beiden Kugeln 52 federnd eingreifen und dadurch den Haltearm 56 sichern.

Das Halteorgan 48 stützt sich über zwei Druckfedern 60 gegen das geschlossene Ende des Schenkels 42 ab, so daß eine am freien Ende des Haltearmes 56 lose drehbar gelagerte Rolle 62 in Richtung des Doppelpfeiles A federnd nachgiebig ist. Zur Begrenzung des Verschiebeweges A ist in eine Seite des Halteorgans 48 eine Längsnut 64 eingearbeitet, in die ein in eine Wand des horizontalen Schenkels 42 eingearbeitete Schraube 66 eingreift.

Die Rolle 62 ist mittels einer Drehachse 68 in einer stufenartigen Vertiefung 70 auf einer Horizontalseite des Haltearms 56 gelagert, so daß sie mit ihrer freien Oberseite im wesentlichen mit der Oberseite des horizontalen Schenkels 42 des Befestigungsblocks 38 fluchtet. Über diese Oberseite der Rolle 62 steht die Drehachse 68 nicht vor.

Aufgrund dieser Ausbildung kann, wie vor allem die Figur 5 zeigt, die Rolle 62 mit ihrer dort unteren Oberfläche sehr nahe an die Arbeitsebene des Tisches 10 geschoben werden, um flache Werkstücke 36 ohne Hindernis gegen einen Anschlag 72 der Bearbeitungsmaschine zu drücken. In den Figuren ist das zugehörige Bearbeitungswerkzeug, im dargestellten Ausführungsbeispiel ein Fräswerkzeug, mit 74 bezeichnet. Seine Antiebswelle läuft durch den Tisch 10 hindurch und wird an dessen Unterseite in bekannter Weise in Drehung versetzt.

In Figur 5 ist ferner ein bekannter Vorschubapparat 76 angedeutet, der dem Werkstück 36 den Vorschub erteilt.

In Figur 4 ist ferner angedeutet, daß unterhalb einer Vorrichtung gemäß der Erfindung eine weitere Vorrichtung derselben Bauart angeordnet werden kann, um auch sehr hohe Werkstücke 36 kippsicher gegen den Anschlag 72 zu drücken und während der Vorschubbewegung am Werkzeug 74 entlang zu führen.

## Patentansprüche

1. Vorrichtung zum Führen von Werkstücken (36) an Werkzeugmaschinen, insbesondere Holzbearbeitungsmaschinen, mit einem das Werkstück elastisch gegen einen Anschlag (72) drückenden Druckorgan (62), das an einem an der Werkzeugmaschine anbringbaren Haltearm (56) befestigt ist, der an einer Vertikalführung (34) stufenlos höhenverstellbar befestigt ist, welche in einer Horizontalführung (20) in Richtung des anzubringenden Drucks stufenlos verstellbar ist, dadurch gekennzeichnet, daß der Haltearm (56) in seiner Druckrichtung federnd nachgiebig in einem Befestigungsblock (38) gelagert ist, welcher in der Vertikalführung (34) höhenverstellbar befestigt ist, und daß die Horizontalführung (20) auf einem Einhängeblock (16) befestigt ist, der auf einem an der Werkzeugmaschine angebrachten Führungsbügel (14) feststellbar ist.

2. Vorrichtung nach Anspruch 1, dadurch gekennzeichnet, daß der Befestigungsblock (38) um eine zur Horizontalführung (20) parallele Drehachse verdrehbar an der Vertikalführung (34) befestigt ist.

3. Vorrichtung nach Anspruch 2, dadurch gekennzeichnet, daß der Befestigungsblock (38) einen zylindrischen Ansatz (78) aufweist, dessen Achse die Drehachse ist und der in die Vertikalführung (34) drehbar und höhenverschieblich eingreift und in dieser festklemmbar ist.

4. Vorrichtung nach Anspruch 3, dadurch gekennzeichnet, daß von dem zylindrischen Ansatz (78) ein exzentrischer Raststift (80) absteht, der in einen in die Vertikalführung (34) eingearbeiteten, vertikalen Führungsschlitz (46) einsetzbar ist.

5. Vorrichtung nach Anspruch 4, dadurch gekennzeichnet, daß der Raststift (80) zur stufenlosen Höhenverstellung des Befestigungsblockes (38) federnd in den Ansatz (78) eindrückbar ist.

6. Vorrichtung nach einem der vorhergehenden Ansprüche, dadurch gekennzeichnet, daß der Haltearm (56) über einen federnden Rastsitz (52, 58) abnehmbar in einem Halteorgan (48) befestigt ist, das in Druckrichtung des Druckorgans (62) federnd nachgiebig in Befestigungsblock (38) gelagert ist.

7. Vorrichtung nach einem der vorhergehenden Ansprüche, dadurch gekennzeichnet, daß das Druckorgan eine am Haltearm (56) lose drehbar gelagerte, flache Rolle (62) ist, deren vom Haltearm (56) wegweisende Oberfläche eben ist und über die die Drehachse (68) der Rolle (62) nicht hervorsteht.

8. Vorrichtung nach einem der vorhergehenden Ansprüche, dadurch gekennzeichnet, daß die Horizontalführung (20) in Richtung ihrer Längserstreckung stufenlos verstellbar auf dem Einhängeblock (16) befestigt ist.

9. Vorrichtung nach einem der vorhergehenden Ansprüche, dadurch gekennzeichnet, daß der Einhängeblock (16) auf dem an der Werkzeugmaschine angebrachten Führungsbügel (14) rechtwinklig zur Druckrichtung des Druckorgans stufenlos verstellbar ist.

**Claims**

1. Apparatus for guiding workpieces (36) on machine tools, especially woodworking machines, comprising a pressure member (62) which elastically presses the workpiece against a stop (72) and is fixed on a retaining arm (56) which can be attached to the machine tool and is fixed in a continuously vertically adjustable manner on a vertical guide (34) which is continuously adjustable in a horizontal guide (20) in the direction of the pressure to be applied, characterized in that the retaining arm (56) is mounted in a spring-loaded resilient manner in its pressure direction in a fixing block (38) which is fixed in a vertically adjustable manner in the vertical guide (34), and that the horizontal guide (20) is fixed on a suspension block (16) which can be secured in position on a guide stirrup (14) attached to the machine tool.

2. Apparatus according to Claim 1, characterized in that the fixing block (38) is fixed on the vertical guide (34) in such a way that it can turn about an axis of rotation parallel to the horizontal guide (20).

3. Apparatus according to Claim 2, characterized in that the fixing block (38) has a cylindrical extension (78) whose axis is the axis of rotation and which engages rotatably and vertically adjustably into the vertical guide (34) and can be firmly clamped in the latter.

4. Apparatus according to Claim 3, characterized in that protruding from the cylindrical extension (78) is an eccentric plunger pin (80) which can be inserted into a vertical guide slot (46) made in the vertical guide (34).

5. Apparatus according to Claim 4, characterized in that the plunger pin (80), for the continuous vertical adjustment of the fixing block (38), can be pressed in a spring-loaded manner into the extension (78).

6. Apparatus according to one of the preceding claims, characterized in that the retaining arm (56), via a spring-loaded arresting seat (52, 58), is removably fixed in a retaining member (48) which is mounted in fixing block (38) in a spring-loaded resilient manner in the pressure direction of the pressure member (62).

7. Apparatus according to one of the preceding claims, characterized in that the pressure member is a flat roller (62) which is mounted in a freely rotatable manner on the retaining arm (56) and whose surface pointing away from the retaining arm (56) is plane and beyond which the pivot (68) of the roller (62) does not project.

8. Apparatus according to one of the preceding claims, characterized in that the horizontal guide (20) is fixed on the suspension block (16) in a continuously adjustable manner in the direction of its longitudinal extent.

9. Apparatus according to one of the preceding claims, characterized in that the suspension block (16) on the guide stirrup (14) attached to the machine tool is continuously adjustable at right angles to the pressure direction of the pressure member.

**Revendications**

1. Dispositif de guidage de pièces (36) dans des machines-outils, en particulier des machines de travail du bois, comprenant un organe d'appui (62) qui presse la pièce élastiquement contre une butée (72) et qui est fixé à un bras de support (56), pouvant être mis en place sur la machine-outil, et fixé réglable en hauteur de façon continue dans un dispositif de guidage vertical (34) que peut être déplacé de façon continue dans la direction d'appui dans un dispositif de guidage horizontal (20), caractérisé en ce que le bras de support (56) est monté dans un bloc de fixation (38) de manière à reculer élastiquement dans la direction d'appui, le bloc de fixation (38) étant fixé réglable en hauteur dans le dispositif de guidage vertical (34), et que le dispositif de guidage horizontal (20) est fixé à un bloc de suspension (16) qui peut être fixé sur un étrier de guidage (14) monté sur la machine-outil.

2. Dispositif selon la revendication 1, caractérisé en ce que le bloc de fixation (38) est fixé au dispositif de guidage vertical (34) de manière à tourner autour d'un axe de rotation parallèle au dispositif de guidage horizontal (20).

3. Dispositif selon la revendication 2, caractérisé en ce que le bloc de fixation (38) comprend un prolongement cylindrique (78) dont l'axe constitue l'axe de rotation et qui pénètre dans le dispositif de guidage vertical (34) de façon à pouvoir tourner, à se déplacer en hauteur et être fixé par serrage sur lui.

4. Dispositif selon la revendication 4, caractérisé en ce que, du prolongement cylindrique (78) fait saillie une tige d'arrêt excentrique (80) qui peut être introduite dans une fente de guidage verticale (46) pratiquée dans le dispositif de guidage vertical (34).

5. Dispositif selon la revendication 4, caractérisé en ce que la tige d'arrêt (80) peut être enfoncée de façon élastique dans le prolongement (78) pour réaliser un réglage en hauteur continu du bloc de fixation (38).

6. Dispositif selon l'une quelconque des revendications précédentes, caractérisé en ce que le bras de support (56) est fixé de façon amovible à un organe de support (48) par l'intermédiaire d'un siège d'arrêt élastique (52, 58), ledit organe (48) étant monté dans le bloc de fixation (38) de façon à reculer élastiquement dans la direction d'appui de l'organe d'appui (62).

7. Dispositif selon l'une quelconque des revendications précédentes, caractérisé en ce que l'organe d'appui est constitué par un galet plat (62) monté fou sur le bras de support (56), dont la surface qui est à l'opposé du bras de support (56) est plane et au-dessus duquel l'axe de rotation (68) du galet (62) ne fait pas saillie.

8. Dispositif selon l'une quelconque des revendications précédentes, caractérisé en ce que le dispositif de guidage horizontal (20) est fixé réglable de façon continue dans le sens de sa longueur sur le bloc de suspension (16).

9. Dispositif selon l'une quelconque des revendications précédentes, caractérisé en ce que le bloc de suspension (16) peut être réglé de façon continue, sur l'étrier de guidage (14) monté sur la machine-outil, à angle droit par rapport à la direction d'appui de l'organe d'appui.

Fig.1

Fig. 2

**Fig. 3**

**Fig. 4**

Fig.5

Fig.6

4